# EUROPEAN PATENT SPECIFICATION

(11) **EP 0 445 696 B1**
(45) Date of publication and mention of the grant of the patent: **30.11.1994**
(21) Application number: 91103218.3
(22) Date of filing: 04.03.1991
(51) Int. Cl.: B30B 9/30

(54) **Process for compacting waste materials and apparatus for performing the same**
Verfahren zum Verdichten von Abfällen und Vorrichtung zur Durchführung des Verfahrens
Procédé pour le compactage des déchets et dispositif pour la mise en oeuvre du procédé

(30) Priority: 05.03.1990 IT 4154890
(43) Date of publication of application: 11.09.1991
(73) Proprietor: Cappellari, Roberto, I-30010 Treporti,(Venezia) (IT); Odorico, Angelo, 33050 Rivignano (Udine) (IT)
(72) Inventor: Cappellari, Roberto, I-30010 Treporti,(Venezia) (IT); Odorico, Angelo, 33050 Rivignano (Udine) (IT)
(74) Representative: Modiano, Guido, Dr.-Ing.

(56) References cited:
- EP-A- 0 016 734
- EP-A- 0 202 605
- DE-A- 2 235 975
- DE-A- 3 804 826
- GB-A- 924 827

## Description

The present invention relates to a process for compacting waste materials, such as urban, industrial or similar waste materials and also special hospital waste and the like, etc., and to the apparatus for performing such process. Such a process and an apparatus are shown in DE-A-2235975.

Compaction as a process for the disposal of urban, industrial or similar waste materials is currently not very widespread due to a series of technical and conceptual difficulties related to the difficulty in providing valid, effective, reliable and economical apparatuses.

The technical and conceptual difficulties in experimentation, design and execution of waste compaction processes and apparatuses are many and differ from one another, but they can be substantially grouped within the scope of a single common denominator, which is constituted by the problem of the continuous variation of the physical and chemical characteristics of the waste being compacted.

The main structural-functional characteristic of the variations of the waste during compaction is constituted by the so-called "delayed liquid phase", which determines its tendency toward non-compactibility.

During a conventional compaction of waste, two phases are in fact distinguished with reference to the separation of the liquids:
- an immediate liquid phase, which manifests itself with the appearance of liquids when compaction begins;
- a delayed liquid phase, which follows the preceding phase and, if it is not caused to manifest itself, blocks the continuation of the compaction due to the principle of incompressibility of liquids.

The aim of the present invention is to provide a process for compacting urban, industrial or similar waste materials which can cause the manifestation of the delayed liquid phase and separate it from the compacted materials.

A consequent primary object is to provide a process and an apparatus for performing it which do not have negative environmental impact aspects.

Another important object is to provide a process and the related apparatus for its execution which have positive large-scale and wide-ranging induced effects in territorial, constructive, economical, environmental, ecological and social situations.

Not least object is to solve the urgent problem currently constituted by the disposal of urban, industrial and special waste, and of urban, industrial, special hospital and similar sludge, etc.

This aim, these objects and others which will become apparent hereinafter are achieved by a process for compacting waste materials which comprises the steps of:
- performing at least one first compression of the waste materials with squeezing and separation of a first liquid phase;
- feeding self-compaction chambers with the compressed materials;
- performing at least one second compression of the materials in the self-compaction chamber, with separation of a second liquid phase;
- heating the compacted materials; and
- cooling the compacted materials.

The apparatus for executing such process is characterized in that it comprises roller compression means arranged above scroll feeders suitable for unloading waste materials into containers which can slide on a transfer line, a compacting press being arranged at the beginning of said line, said line comprising, in succession, a heating tunnel, a cooling tunnel and finally a station for unloading the compacted elements.

Further characteristics and advantages of the invention will become apparent from the detailed description of the operating steps of the process and of an embodiment of the apparatus for its execution, which are given by way of non-limitative example.

The apparatus for the execution of the process is illustrated, again by way of non-limitative example, in the accompanying drawings, wherein:
figure 1 is a schematic top view of the apparatus;
figure 2 is a side view of the region of the apparatus which is assigned to the loading of the materials to be compacted and to the unloading of the compacted materials;
figures 3 and 4 are side views of the section of the apparatus which is assigned to the first compression of the materials;
figure 5 is a top detail view of a shearing unit arranged below the feeding means of the compaction containers;
figure 6 is a view of the compaction press arranged after the container filling region;
figure 7 is a sectional view of the pressing means;
figure 8 is a view of the apparatus in the inlet region of the heating tunnel;
figure 9 is a front view of the inlet of the heating tunnel;
figure 10 is a sectional detail view of the station for unloading the compacted materials.

With reference to the above figures, the waste materials, after being unloaded into a container 1, are possibly pre-screened and pre-dried with hot air and are then loaded by means of a bridge crane 2 into a container 3 with a funnel-shaped bottom which is suitable for unloading them between a pair of parallel rotating rollers 4.

The materials thus undergo a first compression and squeezing which separates a first liquid phase (the immediate liquid phase).

The pre-compacted materials then fall into a hopper 5 which is arranged vertically, has a perforated bottom, and inside which a double converging variable-pitch mixing scroll 6 is arranged.

The separation of the first liquid phase continues in said hopper 5; said phase is removed by means of a pipe 7 and discharged into a containment tank 8 provided with a related discharge gate valve.

Said hopper 5 is arranged above a station on which a wheeled container 9 is located; said container can slide on a railed transfer line 10 and belongs to a series of containers of the same type which are aligned at mutually equal distances and are associated by chains 11; each container defines a self-compaction chamber.

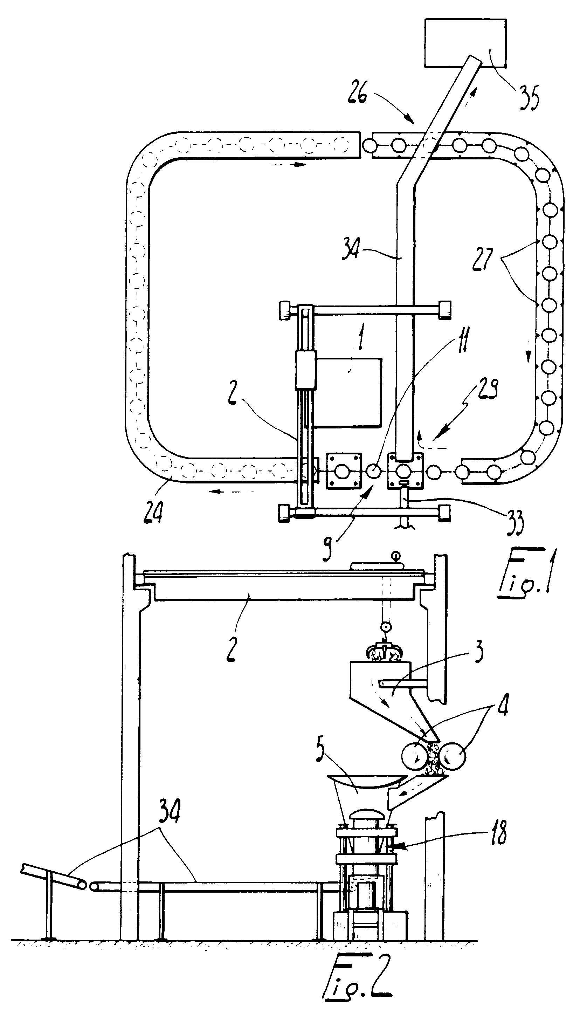

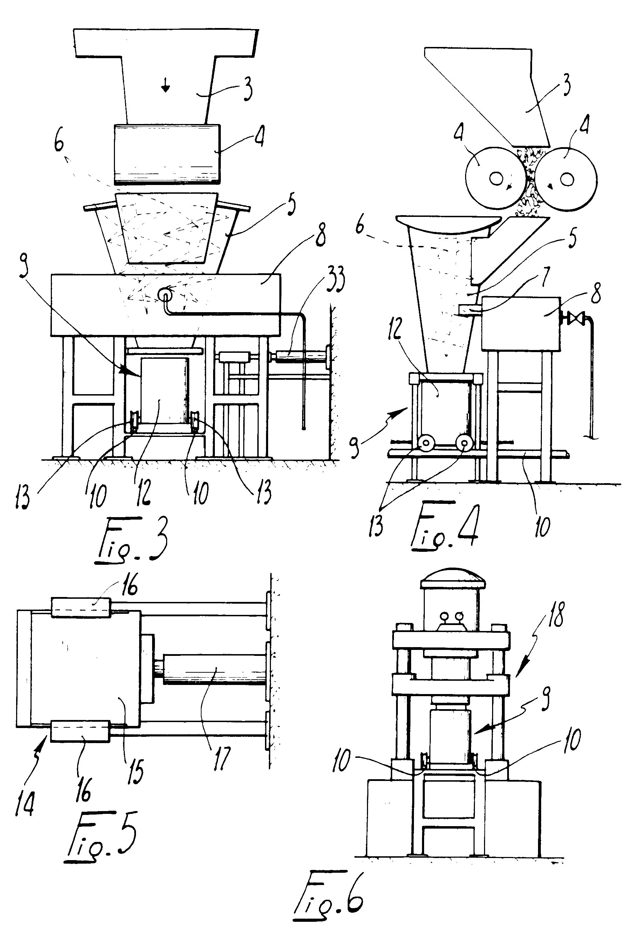

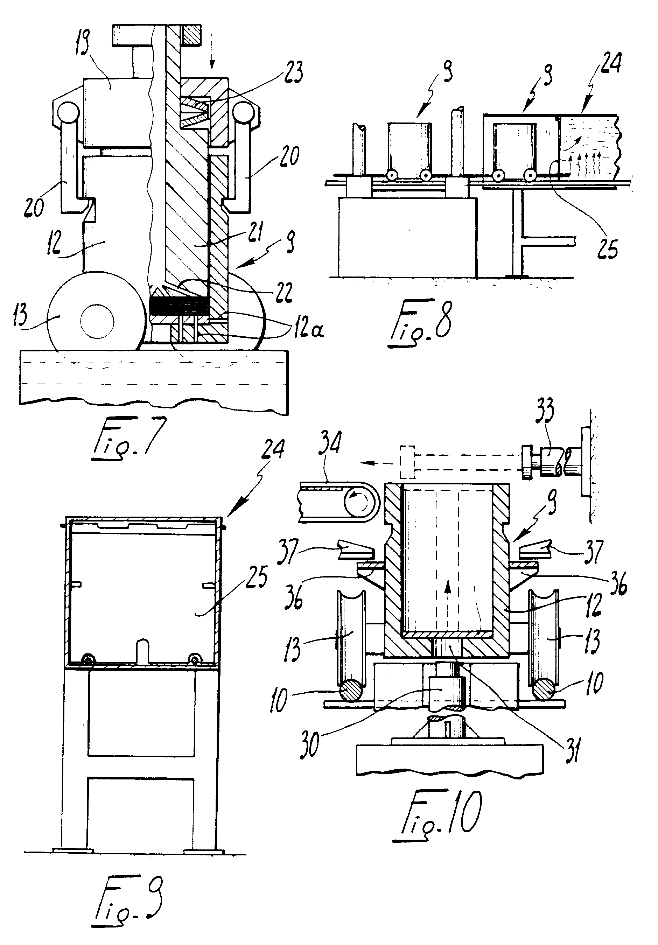

As can be seen in figure 1, the transfer line 10 is conveniently closed in a loop, and the chain formed by the containers 9 is also closed in a loop.

Each of said containers 9 is constituted by a strong metallic drum 12 with a cylindrical shape, with liquid discharge holes 12a on its bottom and with wheels 13 in a downward position.

When each container 9 which is waiting below the hopper 5 is filled, a shearing unit 14, arranged below the hopper 6, is activated; said shearing unit is suitable for separating the materials which, by virtue of the preceding treatments, are uniform and continuous.

Said shearing unit 14 is substantially composed of a horizontal blade 15 which can slide on guides 16 and is actuated by a piston 17.

After filling, each container 9 passes below a compacting press 18, the pressing part whereof comprises a lid 19 which is automatically fixed to the container at the end of compression by means of hooks 20 arranged at diametrically opposite positions.

A piston 21 is arranged axially and is slidably associated with said lid 19, and discharge holes 22 extend from its pressing surface.

Said piston 21 is suitable for maintaining a continuous pressure on the materials with which the container 9 has been filled.

Alternatively, various layers of waste materials (preferably three), intercalated by appropriate flanges and always pressed by said piston 21, can be arranged inside each container 9.

Cup-shaped springs 23 are conveniently arranged between the piston 21 and the lid 19 and are suitable for keeping the hooks 20 under tension and therefore for keeping the lid 19 rigidly associated with the drum 12.

By subsequently exerting a compression on the lid 19 in contrast with the action of the cup-shaped springs 23, the hooks 20 can be released and the drum 12 can be freed from the piston 21.

The separation of a second liquid phase (the delayed liquid phase) occurs in this second compression step and in a subsequent heating step with compression in a self-compaction chamber.

The heating step is performed by passing each container 9 inside a tunnel 24, conveniently with a raisable closure door 25, inside which a high temperature (by way of indication, 300/400 degrees Celsius) and a high pressure are maintained.

This allows the further evaporation of the liquids still contained in the compacted materials.

After the heating step, each container 9 is passed through a tunnel 26 inside which sprays of cold water 27 cool said container 9 and therefore the compacted materials.

An unloading station 29 is arranged at the exit of the tunnel 26 and comprises a piston 30 which arranges itself below each container 9 and, by entering in said container through a hole 31 of its bottom, causes a compacted block 32 to rise; by means of a horizontal piston 33 which is arranged above, said block is transferred onto a conveyor belt 34 which unloads it into a collection container 35.

In order to prevent the action of the piston 30 from also raising the drum 12 due to adhesion of the compacted block 32 to the bottom, said drum has lateral tabs 36 which, when the container 9 is set in place, abut with other tabs 37 which are arranged above them and extend from the structure of the unloading station 29.

The above described process and the apparatus for its execution produce a division of the compaction actions which is aimed at achieving the complete separation of the immediate and delayed liquid phases.

A complete dehumidification and dehydration of the compacted materials is thus obtained, achieving a considerable reduction of the volume of the mass.

The complete elimination of the liquid phase from the compacted materials allows to stabilize said materials from a physical and chemical point of view.

It should furthermore be noted that the compaction action, combined with the thermal action, disinfects and disinfests the compacted materials.

The toxic and harmful elements are precipitated in the form of insoluble or scarcely soluble compounds and are subjected to an action of thermal destruction and inactivation, or are compacted and agglomerated in the mass, which can be subsequently wrapped with a protective covering.

The compacted blocks can be reused as they are or with additives for the execution of structures such as embankments or other structures.

As regards the order of magnitude of the volume and weight reductions obtained with the process according to the invention, it is possible to achieve, by way of indication, reductions of 16-17 times by volume with respect to the original and of 30% by weight.

As regards environmental impact problems, the apparatus does not pollute the air, water or soil in any way; the liquid phases extruded as such or in vapor form are condensed and collected; from collection they pass to complete conditioning (or to other systems) with final emission of the water alone, since the conditioning waste is normally reintroduced into the compacted materials.

No gases or other air pollutants furthermore escape from the apparatus, not merely according to the statutory provisions, which provide for maximum allowable concentrations (as for incinerators, exhausts, etc.) and therefore according to a relative criterion (concentrations), but in absolute terms.

The apparatus does not emit odors, and the compacted materials have no foul odors, are not unsightly, do not percolate, are sterilized and thermally detoxified, and are hard, stable and inert.

The process, and therefore the apparatus, entail no kind of combustion, and the heat increase (300-400 degrees Celsius) is performed in the complete absence of air and oxygen, with the consequent absence of any form of combustion.

The products resulting from compaction are in no way polluting, are compact, stable, dry, highly resistant to ordinary chemical-physical agents, highly resistant to compression and to other mechanical parameters, practically dehydrated and cannot be used as food for animals and parasites.

Other positive effects related to the execution of the process according to the invention are constituted by an improvement in the general conditions of landfills, by the decrease in the number of landfills required and in their capacity, by the possibility of eliminating landfills, since the compacted materials can be reused both as they are and with additives, as previously mentioned, for foundations, reclamations, embankments, roads, etc.

Other positive aspects consist in reducing the need for breaking up and ruining the territory for excavations and for destructions of the balances of the earth's surface to produce construction materials: gravel, sand, etc.; equivalent amounts of material for suitable purposes can be provided by the compacted materials.

Finally, it should be furthermore noted that the disposal of waste can even be performed on-site by providing small apparatuses.

The apparatus can naturally also be mounted so as to be mobile on trucks or boats for ordinary activities or for emergencies and natural or accidental disasters.

In practice it has thus been observed that the invention has achieved the intended aim and objects.

The invention thus conceived is susceptible to numerous modifications and variations, all of which are within the scope of the inventive concept.

All the details may furthermore be replaced with other technically equivalent elements.

The process as described is susceptible to further modifications and integrations without thereby abandoning the scope of the protection of the invention.

In practice, the materials employed for the apparatus and the dimensions may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Process for compacting waste materials, in particular urban, industrial or similar waste materials, characterized in that it comprises the steps of:
- performing at least one first compression of the waste materials with squeezing and separation of a first liquid phase;
- feeding self-compaction chambers with the compressed materials;
- performing at least one second compression of the materials in a self-compaction chamber, with separation of a second liquid phase;
- heating the compacted materials; and
- cooling the compacted materials.

2. Apparatus for compacting waste materials, characterized in that it comprises roller compression means (4) arranged above scroll feeders (5) suitable for unloading the materials into containers (9) which can slide on a transfer line (10), a compacting press (18) being arranged at the beginning of said line, said line comprising, in succession, a heating tunnel (24), a cooling tunnel (26) and finally a station (29) for unloading the compacted elements.

3. Process according to claim 1, characterized in that said first compression is preceded by a pre-screening and by a pre-drying, preferably with hot air.

4. Process according to claim 1, characterized in that it comprises at least two distinct compression steps.

5. Process according to claim 1, characterized in that the heating of the compacted materials occurs at high pressure with a thermal increase preferably to 300/400 degrees Celsius.

6. Process according to claim 1, characterized in that said second compression occurs in self-compaction chambers (9) which are distinct from a compacting press (4) at which takes place said first compression.

7. Process according to claims 1 and 5, characterized in that the compression action in the self-compaction chamber (9) is continuous.

8. Process according to claim 1, characterized in that it combines a compaction compression in a self-compaction chamber (9) with a thermal action.

9. Apparatus according to claim 2, characterized in that said roller compression means are constituted by a pair of parallel motorized rollers (4) through which the waste materials, loaded in a container (6) with a shaped and perforated bottom, are passed.

10. Apparatus according to claim 2, characterized in that said scroll feeders (5) comprise a hopper (6) which is arranged below said roller compression means (4), a variable-pitch double converging scroll (5) being arranged in said hopper (6).

11. Apparatus according to claims 2 and 9, characterized in that said hopper (6) is connected by means of a pipe to a tank for collecting said first liquid phase.

12. Apparatus according to claims 2 and 5, characterized in that below said hopper (6) there is a shearing unit (14) suitable for shearing the materials after the filling of each of said sliding containers (9).

13. Apparatus according to claim 2, characterized in that each of said sliding containers (9) which constitute said self-compaction chambers comprises a drum (12) which is provided, in a downward position, with wheels (13) which can slide on rails (10) which form said transfer line, appropriately in a loop, said containers (9) being aligned and equally spaced from one another and being associated by chains (11).

14. Apparatus according to claims 2 and 8, characterized in that the bottom of said drums (12) has liquid discharge holes (12a) and an axial hole (31) with a considerable diameter.

15. Apparatus according to claim 2, characterized in that the pressing part of said compacting press (18) comprises a lid (19) which can be associated by means of hooks (20) with each of said drums (9), said lid (19) having a compaction piston (21) slidably associated in an axial position, liquid discharge holes (22) extending in the pressing surface of said piston (21), elastic means, such as for example cup-shaped springs (23), being interposed between said piston (21) and said lid (19).

16. Apparatus according to claims 2 and 12 to 14, characterized in that appropriate flanges, to be intercalated with various layers of waste materials, can be arranged inside said containers (9).

17. Apparatus according to claim 2, characterized in that said heating tunnel (24) is kept internally at a high temperature and at a high pressure.

18. Apparatus according to claim 2, characterized in that the cooling action is performed by sprays of cold water (27) in said cooling tunnel (26).

19. Apparatus according to claim 2, characterized in that said unloading station (29) comprises a lower piston (30) which is suitable for penetrating inside each one of said containers (9) through said axial hole (31) of the bottom, lifting the compacted materials (32), and a substantially horizontal upper piston (33) which is suitable for pushing the compacted materials onto a conveyor belt (34) which unloads them into a collection chamber (35).

20. Apparatus according to one or more of the preceding claims, characterized in that the materials to be compacted are loaded by means of a bridge crane (2) from a waste collection container (1).

## Patentansprüche

1. Verfahren zum Verdichten von Abfallmaterialien, ins besondere städtische, industrielle oder vergleichbare Abfallmaterialien, dadurch gekennzeichnet, daß hierbei die Schritte enthalten sind:
- Durchführen wenigstens einer ersten Kompression der Abfallmaterialien mit Auspressen und Abtrennen einer ersten flüssigen Phase;
- Beschicken von Eigenverdichtungskammern mit den komprimierten Materialien;
- Durchführen wenigstens einer zweiten Kompression der Materialien in einer Eigenverdichtungskammer mit Abtrennen einer zweiten flüssigen Phase;
- Erhitzen der verdichteten Materialien; und
- Abkühlen der verdichteten Materialien.

2. Vorrichtung zur Verdichtung von Abfallmaterialien, dadurch gekennzeichnet, daß sie Walzenkompressionseinrichtungen (4) enthält, welche oberhalb von Schneckenfördern (5) angeordnet sind, die sich zum Entladen der Materialien in Behälter (9) eignen, welche auf einer Förderstrecke (10) verschoben werden können, eine Verdichtungspresse (18), welche am Anfang der Strecke angeordnet ist, wobei die Strecke in Folge einen Heizkanal (24), einen Kühlkanal (26) und letztlich eine Station (29) zur Entladung der verdichteten Elemente umfaßt.

3. Verfahren nach Anspruch 1, dadurch gekennzeichnet, daß dem erste Kompressionsschritt eine Vorklassierung und eine Vortrocknung vorzugsweise mit heißer Luft vorangestellt ist.

4. Verfahren nach Anspruch 1, dadurch gekennzeichnet, daß wenigstens zwei ausgeprägte Kompressionsschritte enthalten sind.

5. Verfahren nach Anspruch 1, dadurch gekennzeichnet, daß das Erhitzen der verdichteten Materialien bei hohem Druck mit einem Temperaturanstieg vorzugsweise auf 300/400 °C erfolgt.

6. Verfahren nach Anspruch 1, dadurch gekennzeichnet, daß die zweite Kompression in Eigenverdichtungskammern (9) erfolgt, welche von einer Verdichtungspresse (4) bestimmt werden, bei der die erste Kompression stattfindet.

7. Verfahren nach Anspruch 1 und 5, dadurch gekennzeichnet, daß der Kompressionsvorgang in der Eigenverdichtungskammer (9) kontinuierlich ist.

8. Verfahren nach Anspruch 1, dadurch gekennzeichnet, daß es eine Komprimierungsverdichtung in einer Eigenverdichtungskammer (9) mit einem thermischen Prozeß verbindet.

9. Vorrichtung nach Anspruch 2, dadurch gekennzeichnet, daß die Walzenkompressionseinrichtungen aus einem Paar paralleler motorisierbarer Walzen (4) bestehen, durch die die in einem Behälter (6) mit einem geformten und perforiertem Boden geladenen Abfallmaterialien hindurchgeführt werden.

10. Vorrichtung nach Anspruch 2, dadurch gekennzeichnet, daß die Schneckenförderer (5) einen Trichter (6) umfassen, welcher unterhalb der Walzenkompressionseinrichtungen (4) angeordnet ist, wobei eine konvergierende Doppelschnecke mit verstellbarer Steigung (5) in dem Trichter angeordnet ist.

11. Vorrichtung nach Anspruch 2 und 9, dadurch gekennzeichnet, daß der Trichter (6) mittels einer Rohrleitung mit einem Tank zum Sammeln der ersten flüssigen Phase verbunden ist.

12. Vorrichtung nach Anspruch 2 und 5, dadurch gekennzeichnet, daß unterhalb des Trichters (6) eine Abschereinheit (14) sich befindet, welche zur Abscherung der Materialien nach dem Füllen jeder der verschieblichen Behälter (9) geeignet ist.

13. Vorrichtung nach Anspruch 2, dadurch gekennzeichnet, daß jeder der die Eigenverdichtungskammern bildenden verschieblichen Behälter (9) ein Faß (12) enthält, welches an einer unteren Stelle mit Rädern (13) ausgestattet ist, welche auf Schienen (10) gleiten können, die die Transferstrecke zweckmäßigerweise in einer Schleife (Rückführschleife) bilden, wobei die Behälter (9) aufgereiht, mit gleichen Zwischenräumen voneinander getrennt und mit Ketten (11) verbunden sind.

14. Vorrichtung nach Anspruch 2 und 8, dadurch gekennzeichnet, daß der Boden der Fässer (12) Löcher zum Ablassen der Flüssigkeit (12a) aufweist und ein axiales Loch (31) mit einem beträchtlichem Durchmesser.

15. Vorrichtung nach Anspruch 2, dadurch gekennzeichnet, daß der pressende Teil der Kompressionspresse (18) einen Deckel umfaßt, welcher mittels Haken (20) mit jedem der Fässer (9) verbunden werden kann, wobei der Deckel (19) an einer axialen Stelle einen gleitend verbundenen Verdichtungskolben (21) aufweist, Löcher zum Ablassen der Flüssigkeit (22), welche sich in der pressenden Oberfläche des Kolbens (21) ausbreiten, elastische Einrichtungen wie beispielsweise Tellerfedern (23), welche zwischen dem Kolben (21) und dem Deckel (19) positioniert sind.

16. Vorrichtung nach Anspruch 2 und 12 bis 14, dadurch gekennzeichnet, daß entsprechende Scheiben, die mit verschiedenen Schichten der Abfallmaterialien belegt sind, innerhalb der Behälter (9) angeordnet werden können.

17. Vorrichtung nach Anspruch 2, dadurch gekennzeichnet, daß der Heizkanal (24) inwendig bei einer hohen Temperatur und einem hohen Druck gehalten wird.

18. Vorrichtung nach Anspruch 2, dadurch gekennzeichnet, daß der Abkühlvorgang durch Einspritzdüsen für kaltes Wasser (27) in dem Abkühlungskanal (26) bewerkstelligt wird.

19. Vorrichtung nach Anspruch 2, dadurch gekennzeichnet, daß die Entladestation (29) einen unteren Kolben (30) umfaßt, welcher geeignet ist, in jeden der Behälter (9) durch das axiale Loch (31) des Bodens einzudringen, um die verdichteten Materialien (32) anzuheben, und einen im wesentlichen horizontalen oberen Kolben (33), welcher geeignet ist, die verdichteten Materialien auf ein Förderband (34) zu schieben, das sie in eine Sammelkammer (35) entlädt.

20. Vorrichtung nach einem oder mehreren der vorangegangenen Ansprüche, dadurch gekennzeichnet, daß die zu verdichtenden Materialien aus einem Abfallsammelbehälter mittels eines Brückenkrans (2) geladen werden.

## Revendications

1. Procédé pour compacter des déchets de matières, en particulier des déchets urbains, industriels, ou similaires, caractérisé en ce qu'il comprend les étapes de :
- réaliser au moins une première compression des déchets avec pressage et séparation d'une première phase liquide ;
- alimenter des chambres d'auto-compactage avec les matières comprimées ;
- réaliser au moins une seconde compression des matières dans une chambre d'auto-compactage, avec séparation d'une seconde phase liquide ;
- chauffer les matières compactées ; et
- refroidir les matières compactées.

2. Appareil pour compacter des déchets de matières, caractérisé en ce qu'il comprend des moyens de compression à rouleaux (4) agencés au-dessus de dispositifs d'alimentation à vis (5), appropriés pour décharger les matières dans des conteneurs (9) qui peuvent coulisser sur une ligne de transfert (10), une presse de compactage (18) étant agencée au début de ladite ligne, ladite ligne comprenant successivement, un tunnel de chauffage (24), un tunnel de refroidissement (26) et, finalement, un poste (29) pour décharger les éléments compactés.

3. Procédé selon la revendication 1,
caractérisé en ce que ladite première compression est précédée par un pré-criblage et par un pré-séchage, de préférence, à air chaud.

4. Procédé selon la revendication 1,
caractérisé en ce qu'il comprend au moins deux étapes de compression distinctes.

5. Procédé selon la revendication 1,
caractérisé en ce que le chauffage des matières compactées se produit sous haute pression, avec une augmentation de température, de préférence, de 300/400 degrés Celcius.

6. Procédé selon la revendication 1,
caractérisé en ce que ladite seconde compression se produit dans des chambres d'auto-compactage (9) qui sont distinctes d'une presse de compactage (4) dans laquelle a lieu ladite première compression.

7. Procédé selon les revendications 1 et 5,
caractérisé en ce que l'action de compression dans la chambre d'auto-compactage (9) est continue.

8. Procédé selon la revendication 1,
caractérisé en ce qu'il combine une compression par compactage dans une chambre d'auto-compactage (9), avec une action thermique.

9. Appareil selon la revendication 2,
caractérisé en ce que lesdits moyens de compression à rouleaux sont constitués par une paire de rouleaux motorisés, parallèles (4) entre lesquels passent les déchets, chargés dans un conteneur (3) avec un fond façonné et perforé.

10. Appareil selon la revendication 2,
caractérisé en ce que lesdits dispositifs d'alimentation à vis (5) comprennent une trémie (6) qui est agencée au-dessous desdits moyens de compression à rouleaux (4), deux vis convergentes à pas variable (5) étant agencées dans ladite trémie (6).

11. Appareil selon les revendications 2 et 9,
caractérisé en ce que ladite trémie (6) est reliée, par l'intermédiaire d'un conduit, à un réservoir pour recueillir ladite première phase liquide.

12. Appareil selon les revendications 2 et 5,
caractérisé en ce que, au-dessous de ladite trémie (6), est prévue une unité de cisaillement (14) adaptée pour cisailler les matières après le remplissage de chacun desdits conteneurs coulissants (9).

13. Appareil selon la revendication 2,
caractérisé en ce que chacun desdits conteneurs coulissants (9), qui constituent lesdites chambres d'auto-compactage, comprend un tambour (12) qui est muni, en position basse, de roues (13) qui peuvent coulisser sur des rails (10) qui définissent ladite ligne de transfert, de façon appropriée en boucle, lesdits conteneurs (9) étant alignés et espacés également les uns des autres, et étant associés par des chaînes (11).

14. Appareil selon les revendications 2 et 8,
caractérisé en ce que le fond desdits tambours (12) présente des trous d'évacuation de liquide (12a) et un trou axial (31) ayant un diamètre considérable.

15. Appareil selon la revendication 2,
caractérisé en ce que la partie de pression de ladite presse de compactage (18) comprend un chapeau (19) qui peut être associé, par l'intermédiaire de crochets (20), à chacun desdits tambours (12), ledit chapeau (19) ayant un piston de compactage (21) associé, de façon coulissante, dans une position axiale, des trous d'évacuation de liquide (22) s'étendant dans la surface de pression dudit piston (21), des moyens élastiques, tels que par exemple des ressorts en forme de coupelle (23), étant disposés entre ledit piston (21) et ledit chapeau (19).

16. Appareil selon les revendications 2 et 12 à 14, caractérisé en ce que des rebords appropriés, destinés à intercaler différentes couches de déchets, peuvent être agencés à l'intérieur desdits conteneurs (9).

17. Appareil selon la revendication 2,
caractérisé en ce que ledit tunnel de chauffage (24) est maintenu intérieurement à une température et une pression élevées.

18. Appareil selon la revendication 2, caractérisé en ce que l'action de refroidissement est
réalisée par des pulvérisations d'eau froide (27) dans ledit tunnel de refroidissement (26).

19. Appareil selon la revendication 2,
caractérisé en ce que ledit poste de déchargement (29) comprend un piston inférieur (30) qui est adapté pour pénétrer à l'intérieur de chacun desdits conteneurs (9) à travers ledit trou axial (31) du fond, en soulevant les matières compactées (32), et un piston supérieur sensiblement horizontal (33) qui est adapté pour pousser les matières compactées sur un transporteur à courroie (34) qui les évacue dans une chambre de collecte (35).

20. Appareil selon l'une ou plusieurs des revendications précédentes,
caractérisé en ce que les matières à compacter sont chargées par l'intermédiaire d'un pont-grue (2) à partir d'un conteneur de collecte de déchets.
